# EUROPEAN PATENT APPLICATION

(11) **EP 3 133 543 A1**
(43) Date of publication of application: **22.02.2017**
(21) Application number: 16184361.0
(22) Date of filing: 16.08.2016
(51) Int. Cl.: G06Q 10/06

(54) **METHOD AND DEVICE FOR GUIDING AN OPERATION AND ELECTRONIC APPARATUS**

(30) Priority: 20.08.2015 CN 201510516151
(71) Applicant: Xiaomi Inc., Beijing 100085 (CN)
(72) Inventor: ZHANG, Pengfei, Haidian District, Beijing 100085 (CN); XIA, Yongfeng, Haidian District, Beijing 100085 (CN); LIU, Tiejun, Haidian District, Beijing 100085 (CN)
(74) Representative: Loustalan, Paul William

(57) **Abstract**

Disclosed are a method and device for guiding an operation and an electronic apparatus. The method includes: obtaining (102) completion progress of operation tasks performed by a current user on an intelligent hardware, wherein the operation tasks are set according to operation functions of the intelligent hardware; selecting (104) a current operation task from uncompleted operation tasks based on the completion progress; configuring (106) operation authorization of the intelligent hardware for the current user, so as to restrict the current user from implementing operation functions corresponding to uncompleted operation tasks except for the current operation task; and updating (108) the completion progress based on a completion status of the current operation task performed by the current user.

## Description

### TECHNICAL FIELD

The present disclosure generally relates to terminal technologies and in particular to a method and device for guiding an operation and an electronic apparatus.

### BACKGROUND

The launch of various intelligent hardware, such as intelligent home appliances, smart balance vehicles, smart drones, brings more and more convenience and joy with people's life.

However, some intelligent hardware may be improved greatly compared to traditional devices, while other intelligent hardware may have no corresponding traditional devices. Therefore, it is necessary for a user to take considerable effort on learning operations of intelligent hardware, thereby affecting user experience or even leading to the user's give-up.

### SUMMARY

Accordingly, the present disclosure provides a method and device for guiding an operation and an electronic apparatus, in accordance with the claims which follow.

According to a first aspect of the present disclosure, a method for guiding an operation is provided, including that:
completion progress of operation tasks performed by a current user on an intelligent hardware is obtained, wherein the operation tasks are set according to operation functions of the intelligent hardware;
a current operation task is selected from uncompleted operation tasks based on the completion progress;
operation authorization of the intelligent hardware is configured for the current user, so as to restrict the current user from implementing operation functions corresponding to the uncompleted operation tasks except for the current operation task; and
the completion progress is updated based on a completion status of the current operation task performed by the current user.

Since an operation task for an intelligent hardware is set for a user, the user can be familiar with an operation of the intelligent hardware gradually during implementation of the operation task. Thus, it is helpful to increase learning enjoyment. Learning cost would be reduced since it is not necessary for the user to explore the operation of the intelligent hardware. Also, since operation authorization is configured for the user, the user can only operate an operation task which has been learned or is being learned, thereby causing the user to gradually master an operation manner and avoiding a danger incurred by use of an operation function not learned by the user. Therefore, security of the intelligent hardware is ensured.

According to an exemplary embodiment, the step that the completion progress of the operation tasks performed by the current user on the intelligent hardware is obtained may include that:
identity information of the current user is identified; and
completion progress corresponding to the identity information is searched from local storage space of the intelligent hardware; or a request is issued to a server for obtaining completion progress corresponding to the identity information.

According to an exemplary embodiment, the method may further include that:
the current operation task is sent to a mobile device connected with the intelligent hardware, such that guiding information for the current operation task is displayed on the mobile device.

According to an exemplary embodiment, the method may further include that:
historical operation data of the current user is recorded; and
the historical operation data is uploaded to a server, wherein the server analyzes a hidden danger operation of the current user statistically, generates an operation task for the hidden danger operation and updates the completion progress.

According to a second aspect of the present disclosure, a method for guiding an operation is provided, which includes that:
all of operation tasks supported by an intelligent hardware are obtained;
a request for obtaining completion progress of all of the operation tasks performed by a current user on the intelligent hardware is issued to a server, and the completion progress is sent to the intelligent hardware such that operation authorization is configured for the current user by the intelligent hardware;
guiding information for a current operation task of the current user is displayed; and
a completion status of the current operation task performed by the current user is received from the intelligent hardware, and is uploaded to the server so as to update the completion progress by the server.

Since an operation task for an intelligent hardware is set for a user, the user can be familiar with an operation of the intelligent hardware gradually during implementation of the operation task. Thus, it is helpful to increase learning enjoyment. Learning cost would be reduced since it is not necessary for the user to explore the operation of the intelligent hardware. Also, since operation authorization is configured for the user, the user can only operate an operation task which has been learned or is being learned, thereby causing the user to gradually master an operation manner and avoiding a danger incurred by use of an operation function not learned by the user. Therefore, security of the intelligent hardware is ensured.

According to a third aspect of the present disclosure, a method for guiding an operation is provided, including that:
historical operation data of a current user for an intelligent hardware is obtained;
a hidden danger operation of the current user is analyzed statistically, and an operation task is generated for the hidden danger operation; and
completion progress of all of operation tasks performed by the current user on the intelligent hardware is updated according to the operation task for the hidden danger operation.

Since an operation task for an intelligent hardware is set for a user, the user can be familiar with an operation of the intelligent hardware gradually during implementation of the operation task. Thus, it is helpful to increase learning enjoyment. Learning cost would be reduced since it is not necessary for the user to explore the operation of the intelligent hardware. Also, since operation authorization is configured for the user, the user can only operate an operation task which has been learned or is being learned, thereby causing the user to gradually master an operation manner and avoiding a danger incurred by use of an operation function not learned by the user. Therefore, security of the intelligent hardware is ensured.

According to an exemplary embodiment, the step that the operation task for the hidden danger operation is generated may include:
the operation task for the hidden danger operation is set to be in an uncompleted state when the operation task for the hidden danger operation already exists.

According to an exemplary embodiment, the step that the operation task for the hidden danger operation is generated may include:
a new operation task is created for the intelligent hardware.

According to a fourth aspect of the present disclosure, a device for guiding an operation is provided, including:
an acquisition unit, configured to obtain completion progress of operation tasks performed by a current user on an intelligent hardware, wherein the operation tasks are set according to operation functions of the intelligent hardware;
a selection unit, configured to select a current operation task from uncompleted operation tasks based on the completion progress;
a configuration unit, configured to configure operation authorization of the intelligent hardware for the current user, so as to restrict the current user from implementing operation functions corresponding to the uncompleted operation tasks except for the current operation task; and
an update unit, configured to update the completion progress based on a completion status of the current operation task performed by the current user.

According to an exemplary embodiment, the acquisition unit may include:
an identification sub-unit, configured to identify identity information of the current user; and
a look-up sub-unit or a request sub-unit, wherein the look-up sub-unit is configured to search for completion progress corresponding to the identity information from local storage space of the intelligent hardware; and the request sub-unit is configured to issue a request to a server for obtaining completion progress corresponding to the identity information.

According to an exemplary embodiment, the device may further include:
a sending unit, configured to send the current operation task to a mobile device connected with the intelligent hardware, such that guiding information for the current operation task is displayed on the mobile device.

According to an exemplary embodiment, the device may further include:
a recording unit, configured to record historical operation data of the current user; and
an uploading unit, configured to upload the historical operation data to a server, wherein the server analyzes a hidden danger operation of the current user statistically, generates an operation task for the hidden danger operation and updates the completion progress.

According to a fifth aspect of the present disclosure, a device for guiding an operation is provided, including:
an acquisition unit, configured to obtain all of operation tasks supported by an intelligent hardware;
a transmission unit, configured to issue to a server a request for obtaining completion progress of all of the operation tasks performed by a current user on the intelligent hardware, and send the completion progress to the intelligent hardware such that operation authorization is configured for the current user by the intelligent hardware;
a display unit, configured to display guiding information for a current operation task of the current user according to the current operation task of the current user; and
an upload unit, configured to receive a completion status of the current operation task performed by the current user from the intelligent hardware, and upload the completion status to the server so as to update the completion progress by the server.

According to a sixth aspect of the present disclosure, a device for guiding an operation is provided, including:
an acquisition unit, configured to obtain historical operation data of a current user for an intelligent hardware;
a generation unit, configured to analyze a hidden danger operation of the current user statistically, and generate an operation task for the hidden danger operation; and
an update unit, configured to update completion progress of all of operation tasks performed by the current user on the intelligent hardware according to the operation task for the hidden danger operation.

According to an exemplary embodiment, the generation unit may include:
a setting sub-unit, configured to set the operation task for the hidden danger operation to be in an uncompleted state when the operation task for the hidden danger operation already exists.

According to an exemplary embodiment, the generation unit may include:
a creation sub-unit, configured to create a new operation task for the intelligent hardware.

According to a seventh aspect of the present disclosure, an electronic apparatus is provided, including:
a processor;
a memory configured to store instructions executable by the processor;
wherein the processor is configured to:
   obtain completion progress of operation tasks performed by a current user on an intelligent hardware, wherein the operation tasks are set according to operation functions of the intelligent hardware;
   select a current operation task from uncompleted operation tasks based on the completion progress;
   configure operation authorization of the intelligent hardware for the current user, so as to restrict the current user from implementing operation functions corresponding to the uncompleted operation tasks except for the current operation task; and
   update the completion progress based on a completion status of the current operation task performed by the current user.

According to an eighth aspect of the present disclosure, an electronic apparatus is provided, including:
a processor;
a memory configured to store instructions executable by the processor;
wherein the processor is configured to:
   obtain all of operation tasks supported by an intelligent hardware;
   issue a request to a server for obtaining completion progress of all of the operation tasks performed by a current user on the intelligent hardware, and send the completion progress to the intelligent hardware such that operation authorization is configured for the current user by the intelligent hardware;
   display guiding information for a current operation task according to the current operation task of the current user; and
   receive a completion status of the current operation task performed by the current user from the intelligent hardware, and upload the completion status to the server so as to update the completion progress by the server.

According to a ninth aspect of the present disclosure, an electronic apparatus is provided, including:
a processor;
a memory configured to store instructions executable by the processor;
wherein the processor is configured to:
   obtain historical operation data for an intelligent hardware by a current user;
   analyze a hidden danger operation of the current user statistically, and generate an operation task for the hidden danger operation; and
   update completion progress of all of operation tasks performed by the current user on the intelligent hardware according to the operation task for the hidden danger operation.

The advantages and technical effects of the devices according to the invention correspond to those of the methods presented above.

In one particular embodiment, the steps of the methods for guiding an operation are determined by computer program instructions.

Consequently, according to a tenth aspect, the disclosure is also directed to a computer program for executing the steps of a method for guiding an operation as described above when this program is executed by a computer.

This program can use any programming language and take the form of source code, object code or a code intermediate between source code and object code, such as a partially compiled form, or any other desirable form.

The disclosure is also directed to a computer-readable information medium containing instructions of a computer program as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

It is to be understood that both the foregoing general description and the following detailed description are exemplary and explanatory only and are not restrictive of the disclosure.

### BRIEF DESCRIPTION OF THE DRAWINGS

The accompanying drawings, which are incorporated in and constitute a part of this specification, illustrate aspects consistent with the present disclosure and, together with the description, serve to explain the principles of the present disclosure, in which:
Fig. 1 is a flow chart showing a method for guiding an operation based on an intelligent hardware side according to an exemplary aspect of the present disclosure;
Fig. 2 is a schematic diagram illustrating an application scenario according to an exemplary aspect of the present disclosure;
Fig. 3 is a flow chart showing another method for guiding an operation based on an intelligent hardware side according to an exemplary aspect of the present disclosure;
Fig. 4 is a flow chart showing a method for guiding an operation based on a mobile device side according to an exemplary aspect of the present disclosure;
Fig. 5 is a schematic diagram illustrating another application scenario according to an exemplary aspect of the present disclosure;
Fig. 6 is a flow chart showing a method for guiding an operation according to an exemplary aspect of the present disclosure;
Fig. 7 is a flow chart showing a method for guiding an operation based on an intelligent hardware side or a server side according to an exemplary aspect of the present disclosure;
Fig. 8 is a flow chart showing another method for guiding an operation based on an intelligent hardware side or a server side according to an exemplary aspect of the present disclosure;
Fig. 9 to Fig. 12 are block diagrams illustrating a device for guiding an operation based on an intelligent hardware side according to an exemplary aspect of the present disclosure;
Fig. 13 is a block diagram illustrating a device for guiding an operation based on a mobile device side according to an exemplary aspect of the present disclosure;
Fig. 14 to Fig. 16 are block diagrams illustrating a device for guiding an operation based on an intelligent hardware side or a server side according to an exemplary aspect of the present disclosure;
Fig. 17 is a schematic structural diagram illustrating a device for guiding an operation based on an intelligent hardware side or a mobile device side according to an exemplary aspect of the present disclosure; and
Fig. 18 is a schematic structural diagram illustrating a device for guiding an operation based on a server side according to an exemplary aspect of the present disclosure.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

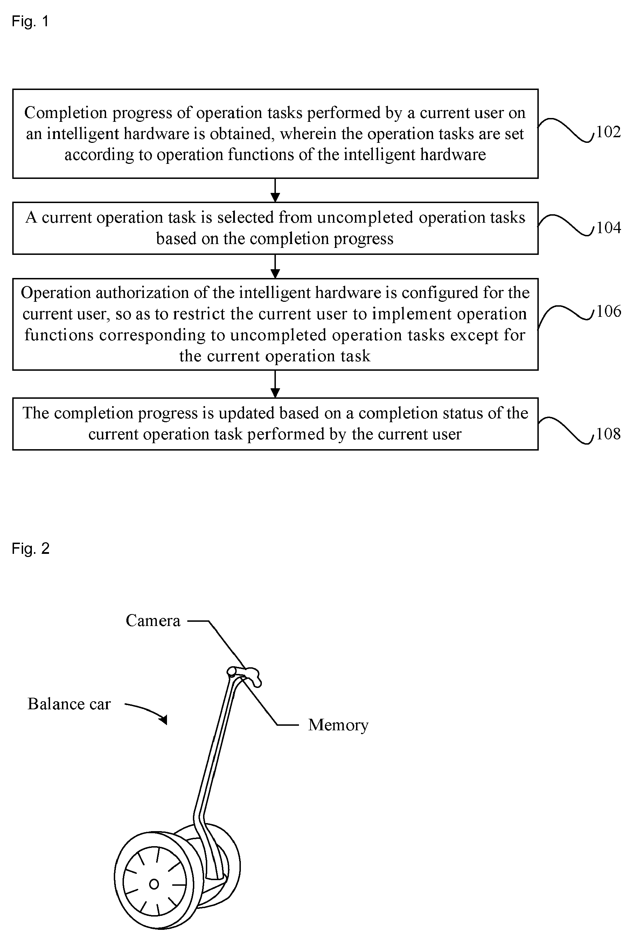

Fig. 1 is a flow chart showing a method for guiding an operation based on an intelligent hardware side according to an exemplary aspect of the present disclosure. As shown in Fig. 1, the method is applied to an intelligent hardware, and the method includes following steps.

At Step 102, completion progress of operation tasks performed by a current user on an intelligent hardware is obtained, wherein the operation tasks are set according to operation functions of the intelligent hardware.

In the embodiment, with respect to the operation functions of the intelligent hardware, operation tasks corresponding to the operation functions are preset, such that the user can learn how to operate the intelligent hardware by means of completing an operation task, which is not only of greatly interest, but also of significant guiding function, since it is not necessary for the user to explore each of the operations and functions of the intelligent hardware.

In the embodiment, the intelligent hardware can identify identity information of the current user, and search for completion progress related to the identity information from local storage space of the intelligent hardware. In an application scenario of the embodiment, all of the processing procedures can be completed only by the intelligent hardware itself. For example, taking "a balance car" shown in Fig. 2 as an example, the balance car can perform a face acquisition and recognition on the user via a pre-configured camera, so as to determine identity information of the current use. However, other identity recognition manners may be also used, which is not limited in the present disclosure. Also, a memory is further provided in the balance car, so that the balance car can read completion progress related to the current user form the memory.

Further, in other application scenarios, the intelligent hardware can also perform an interactive operation with a mobile device, such as a smart phone, or a server, or the like. As an example, with respect to the step of "identifying identity information of the user," this step can be implemented via a camera of a mobile device such as a smart phone, and then the identity information of the user is determined through data interaction between the intelligent hardware and the mobile device. As another example, with respect to the step of "obtaining completion progress," the intelligent hardware may be directly connected to the server via Internet, and may request completion progress related to the identity information of the current user from the server. Alternatively, the intelligent hardware may interact with the mobile device in a near field communication manner such as blue tooth, WIFI or the like, and request completion progress related to the identity information of the current user from the server.

At Step 104, a current operation task is selected from uncompleted operation tasks based on the completion progress.

In the embodiment, there is a certain sequential order among operation tasks, and the sequential order may be set arbitrarily by the user, or based on complexity of respective operation tasks, which is not limited in the present disclosure.

At Step 106, operation authorization of the intelligent hardware is configured for the current user, so as to restrict the current user from implementing operation functions corresponding to uncompleted operation tasks except for the current operation task.

In the embodiment, since the operation authorization is configured, the user can use an operation function corresponding to a completed operation task. Because the current user has completed the learning of this operation function, security of the user is ensured during the operation. The user can also use an operation function corresponding to the current operation task such that the user can learn the operation function corresponding to the current operation task. In addition, the current user cannot use an operation function corresponding to an uncompleted operation task, thereby avoiding blind attempt or unexpected activation from the user, and facilitating reduction of security risk.

At Step 108, the completion progress is updated based on a completion status of the current operation task performed by the current user.

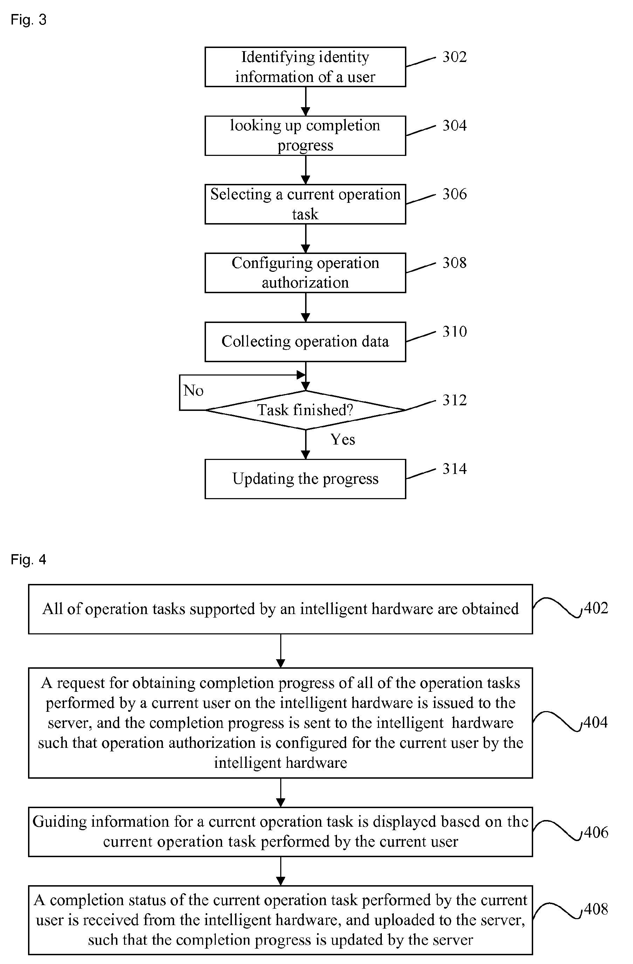

The Fig. 3 is a flow chart showing a method for guiding an operation based on an intelligent hardware side according to an example embodiment. As shown in Fig. 3, the method is applied to an intelligent hardware, and the method includes following steps.

At Step 302, identity information of a user is identified.

In the embodiment, there may be a case that multiple users commonly use the same intelligent hardware. Thus, completion progress of each user can be managed separately through identifying identity information of each user.

Taking the balance car shown in Figure 2 as an example, face recognition may be performed on a current user via a camera arranged on the balance car, such that identity information of the current user is determined.

At Step 304, completion progress is looked up.

In the embodiment, taking the balance car shown in Fig. 2 as an example, completion progress of each user may be stored in a memory of the balance car. Thus, completion progress corresponding to the current user is found from the memory according to the identified identity information of the current user.

At Step 306, a current operation task is selected.

In the embodiment, there are multiple operation tasks for the intelligent hardware. Only a part of operation tasks may be completed (or, none of the operation tasks is completed), which is seen from completion progress of the current user, and one or more of uncompleted operation tasks may be selected as an current operation task according to a preset order. For example, a first uncompleted operation task may be selected as the current operation task.

At Step 308, operation authorization is configured.

In the embodiment, since the operation authorization of the intelligent hardware for the current user is configured, the current user can only perform an operation function corresponding to an operation task which has been studied and an operation function corresponding to the current operation task, but not be able to perform operation functions corresponding to other uncompleted operation tasks.

For example, given that the current user is learning a balance car shown in Fig. 2, if a current operation task of the current user is "turning left" and the current user has completed an operation task "going forward 10 meters," the user has operation authorization for "going straight" and "turning left," but no operation authorization for "turning right" which is not studied.

At Step 310, operation data is collected.

In the embodiment, the operation data refers to data collected by the intelligent hardware when the current operation task is performed by the current user. Taking a balance car as an example, if the current operation task is "turning right," the operation data includes a rotational angle, an inclination degree of the vehicle body, a traveling speed of the balance car. Thus, it can be determined whether the current user has successfully completed a "turning right" operation using the balance car

At Step 312, it is determined that whether the current operation task is completed; if the current operation task is completed, the progress proceeds to step 314, or else, the current operation task is continuously performed.

At Step 314, a progress is updated.

In the embodiment, if the current operation task is completed, the completion progress of the current user may be updated, such that the intelligent hardware can determine a new current operation task and configure operation authorization based on the updated completion progress.

Fig. 4 is a flow chart showing a method for guiding an operation based on a mobile device side according to an example embodiment. As shown in Fig. 4, the method is applied to a mobile device, and the method includes following steps.

At Step 402, all of operation tasks supported by an intelligent hardware are obtained.

In the embodiment, the mobile device may be connected to the intelligent hardware to obtain all of supported operation tasks from the intelligent hardware. Alternatively, the mobile device may be connected to a server to obtain all of operation tasks supported by the intelligent hardware from the server.

At Step 404, a request for obtaining completion progress of all of the operation tasks performed by a current user on the intelligent hardware is issued to the server, and the completion progress is sent to the intelligent hardware such that operation authorization is configured for the current user by the intelligent hardware.

In the embodiment, all completion progress which is performed by the current user on the intelligent hardware is stored in the server. Therefore, even though the current user uses the same intelligent hardware as other users, a user identity can also be identified, respective completion progress can be obtained accurately and respective operation authorization is configured, thereby facilitating reduction of operation risk.

At Step 406, guiding information for a current operation task is displayed based on the current operation task of the current user.

In the embodiment, the guiding information may be a text, a picture, an animation or the like presented on a display screen of the mobile device, or may include voice guiding information. According to the displayed guiding information, the current user can understand the current operation task as soon as possible, thereby facilitating reduction of learning cost.

At Step 408, a completion status of the current operation task performed by the current user is received from the intelligent hardware, and uploaded to the server, such that completion progress is updated by the server.

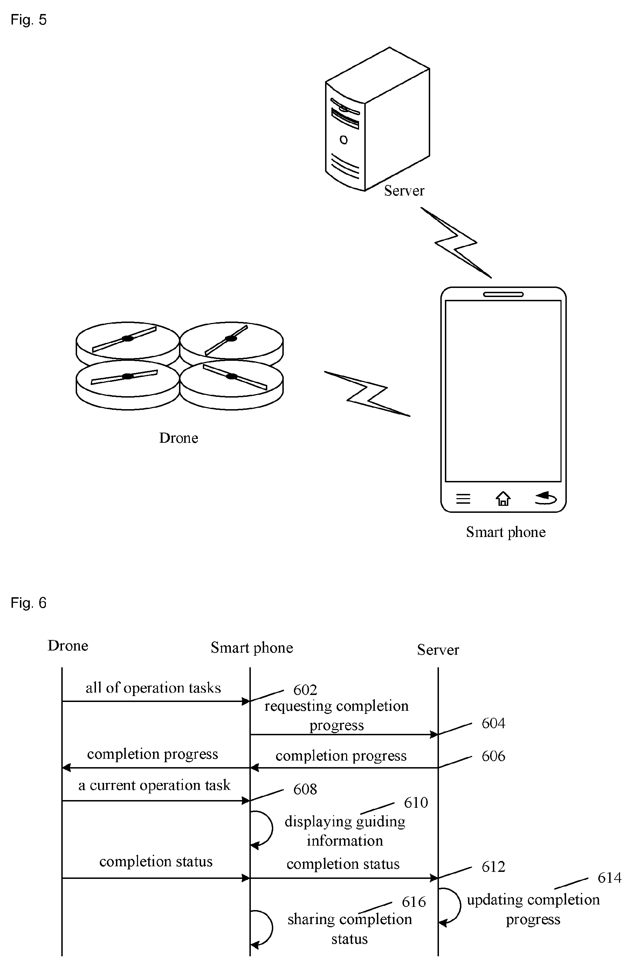

With respect to the embodiment shown in Fig. 4, Fig. 5 illustrates an application scenario corresponding to the embodiment. As shown in Fig. 5, given that an intelligent hardware is a drone and a mobile device is a smart phone, the technical solution for guiding an operation in the present disclosure is implemented by the drone, the smart phone and the server. For convenience of understanding, combined with an interaction process among these three parities in an application scenario shown in the Fig. 5, the technical solution of the present disclosure is explained below in view of Fig. 6. Fig. 6 is a flow chart showing a method for guiding an operation according to an example embodiment. As shown in Fig. 6, the method includes following steps.

At Step 602, a smart phone obtains all of operation tasks supported by a drone from the drone after the smart phone is connected to the drone.

In the embodiment, a near field communication connection between the smart phone and the drone may be established via a blue tooth or WIFI. However, any communication connection can be applied herein, which is not limited in the present disclosure.

At Step 604, the smart phone issues a request to the server for obtaining completion progress of an operation task which is performed by the current user on the drone.

In the embodiment, the smart phone can be connected to Internet, such that a remote access and data request for the server can be implemented.

In the embodiment, in one case, the drone only belongs to one user by default and cannot be operated by other users. Thus, completion progress can be bound to the drone, and any user can share the same completion progress. In another case, each user has respective completion progress, and different users may have different completion progress when operating the same unmanned plane.

For the latter, it is implied that identity information of the current user is obtained. The identity information of the current user can be obtained via the drone or the smart phone, and be included in the request which is sent to the server by the smart phone, such that the server can accurately read respective completion progress. Also, the drone or the smart phone may only obtain an identity characteristic of the current user, and send the identity characteristic to the server, such that the identity information of the current user can be identified by the server.

At Step 606, the smart phone receives completion progress returned by the server, and sends the completion progress to the drone.

At Step 608, the drone determines current operation task and informs the smart phone of the current operation task.

At Step 610, guiding information corresponding to the current operation task is displayed by the smart phone.

In the embodiment, the guiding information may be a text, a picture, an animation or the like presented on a display screen of the mobile device, or may also include voice guiding information. According to the displayed guiding information, the current user can understand the current operation task as soon as possible, thereby facilitating reduction of learning cost.

At Step 612, the smart phone receives a completion status of the current operation task performed by the current user which is sent by the drone, and sends the completion status to the server.

At Step 614, the server updates completion progress corresponding to the current user according to the completion status.

At Step 616, the smart phone may also share the completion status.

In the embodiment, the completion status may include information such as, task completion time, task attempt numbers or the like, and the current user may share the information with other users, or may send the information to a social platform, such that a comparison and interaction process can be implemented between different users, thereby enhancing interest of learning.

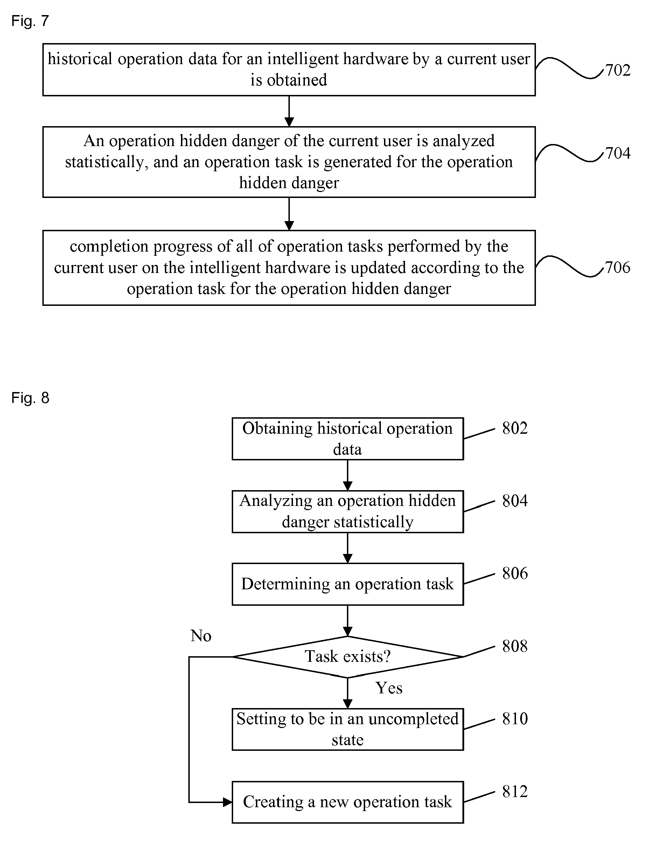

Fig. 7 is a flow chart showing a method for guiding an operation based on an intelligent hardware side or a server side according to an example embodiment. As shown in Fig. 7, the method is applied to an intelligent hardware or a server, and the method includes following steps.

At Step 702, historical operation data of a current user for an intelligent hardware is obtained.

At Step 704, a hidden danger operation of the current user is analyzed statistically, and an operation task is generated for the hidden danger operation.

At Step 706, completion progress of all of operation tasks performed by the current user on the intelligent hardware is updated according to the operation task for the hidden danger operation.

In the embodiment, even though the current user studies an operation for the intelligent hardware by performing a pre-configured operation task, learning effects of different users vary, and they may forget what they studied. Thus, the historical operation data of the current user can be collected and analyzed, such that the hidden danger operation can be analyzed statistically, and a corresponding operation task is generated. As such, the hidden danger of the operation can be eliminated since the current user can enhance learning and practicing, thereby improving operation security of the intelligent hardware.

Herein, the term hidden danger operation indicates an operation action with security risk, including security risk for the intelligent hardware itself (for example, causing the intelligent hardware to be damaged) and security risk for the current user (for example, causing the current user to be injured).

Fig. 8 is a flow chart showing a method for guiding an operation based on an intelligent hardware side or a server side according to an example embodiment. As shown in Fig. 8, the method is applied to an intelligent hardware or a server, and the method includes following steps.

At Step 802, historical operation data of a current user for an intelligent hardware is obtained.

In the embodiment, when an operation function is completed by the current user using the intelligent hardware, related operation data can be collected by the intelligent hardware, such that historical operation data of the current user is obtained.

In the embodiment, if the method is applied to an intelligent hardware, the intelligent hardware can search for historical operation data of the current user from a local storage space. Alternatively, the historical operation data may also be stored on a cloud storage space, and the intelligent hardware can be directly connected to a server or indirectly connect to a server through a mobile device, and issue a request to the server for obtaining historical operation data of the current user.

If the method is applied to a server, the intelligent hardware may store all collected operation data to a cloud storage space, and the server can obtain historical operation data of the current user form the cloud storage space as required.

At Step 804, the hidden danger operation is determined according to the statistical analysis on the historical operation data.

At Step 806, a corresponding operation task is determined according to the determined hidden danger operation.

For example, if it is found from the analysis on historical operation data that, in using a balance car by the current user, the current user often jumps from a balance car or falls down when a speed of the balance car is above 20km/h and the balance car is turning left, which easily causes the current user to be injured, then it is determined that there is a hidden danger operation.

Accordingly, in order to eliminate the above hidden danger operation, it is necessary for the current user to practice a left-turning operation at a speed below 20km/h, and thus a corresponding operation task may be set, such as, "straight driving at a speed of 25km/h," "turning left at a speed of 10km/h," "turning left at a speed of 15km/h," "turning left at a speed of 18km/h," "turning left at a speed of 20km/h," "turning left at a speed of 22km/h," and so on, such that the current user finally masters how to implement a left-turning operation at a speed above 20km/h.

For another example, from the analysis on historical operation data, it is found that, during operation of a drone by the current user, the drone tends to fall down during landing of the drone, which easily causes the drone to be damaged. Thus, it is determined that there is a hidden danger operation. Thus, in order to eliminate the above hidden danger operation, a corresponding operation task may be generated, such that a landing operation of the drone by the current user can be pointedly trained.

At Step 808, it is determined whether the determined operation task existed, that is, it is determined whether the determined operation task is a pre-configured operation task of the intelligent hardware. If the determined operation task existed, the process proceeds to Step 810; or else, the process proceeds to Step 812.

At Step 810, an operation task for a hidden danger operation is set as an uncompleted state such that the current user can perform repeated learning and training with respect to the same operation task.

At Step 812, a new operation task for the intelligent hardware is created, such that the operation task is more personalized and the current user can perform highly targeted learning and training, thereby facilitating enhancement of efficiency and effectiveness of learning.

The present disclosure further provides embodiments of a device for guiding an operation corresponding to embodiments of the abovementioned method for guiding an operation.

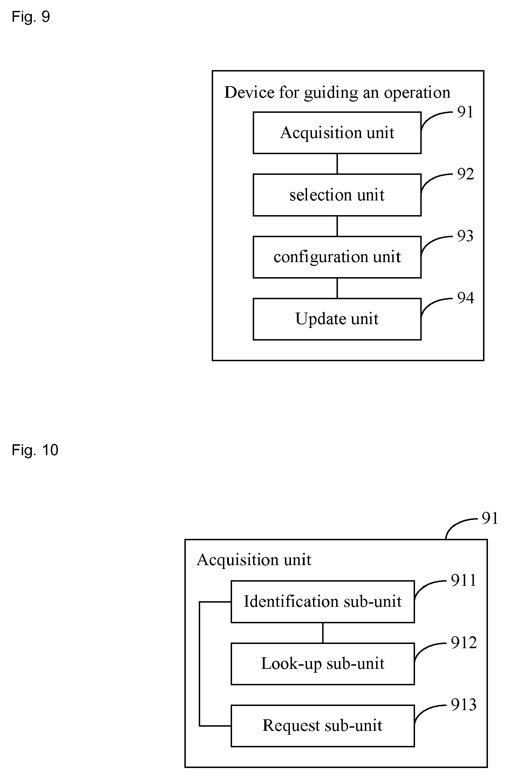

Fig. 9 is a block diagram illustrating a device for guiding an operation based on an intelligent hardware side according to an example embodiment. Referring to Fig. 9, the device includes an acquisition unit 91, a selection unit 92, a configuration unit 93, and an update unit 94.

The acquisition unit 91 is configured to obtain completion progress of an operation task performed by a current user on an intelligent hardware, wherein the operation task is set according to an operation function of the intelligent hardware.

The selection unit 92 is configured to select a current operation task from uncompleted operation tasks based on the completion progress.

The configuration unit 93 is configured to configure operation authorization of the intelligent hardware for the user, so as to restrict the current user from implementing operation functions corresponding to uncompleted operation tasks except for the current operation task.

The updating unit 94 is configured to update the completion progress based on a completion status of the current operation task performed by the current user.

As shown in Fig. 10, which is a block diagram illustrating a device for guiding an operation according to an example embodiment, on basis of the embodiment shown in Fig. 9, the acquisition unit 91 may include an identification sub-unit 911, and the acquisition unit 91 may also include a look-up sub-unit 912 or a request sub-unit 913.

The identification sub-unit 911 is configured to identify identity information of the current user.

The look-up sub-unit 912 is configured to search for completion progress corresponding to the identity information from local storage space of the intelligent hardware.

The request sub-unit 913 is configured to issue a request to the server for obtaining completion progress corresponding to the identity information.

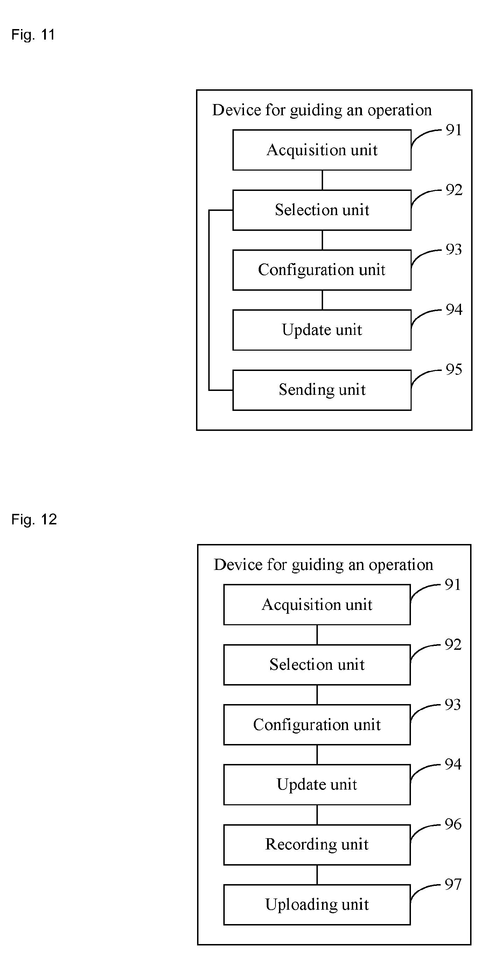

As shown in Fig. 11, which is a block diagram illustrating a device for guiding an operation according to an example embodiment, on basis of the embodiment shown in Fig. 9, the device may also include a sending unit 95.

Specifically, the sending unit 95 is configured to send the current operation task to a mobile device connected with the intelligent hardware, such that guiding information for the current operation task is displayed on the mobile device.

It should be noted that, configuration of the sending unit 95 in an embodiment shown in Fig. 11 may be included in an embodiment shown in Fig. 10, which is not limited in the present disclosure.

As shown in Fig. 12, which is a block diagram illustrating a device for guiding an operation according to an example embodiment, on basis of the embodiment shown in Fig. 9, the device may also include a recording unit 96 and an uploading unit 97.

Specifically, the recording unit 96 is configured to record historical operation data of the current user.

The uploading unit 97 is configured to upload the historical operation data to a server. The server analyzes a hidden danger operation of the current user statistically, generates an operation task for the hidden danger operation and updates a completion progress.

It should be noted that, configuration of the recording unit 96 and the uploading unit 97 in an embodiment shown in Fig. 12 may be included in the embodiments shown in Fig. 10 and Fig. 11, which is not limited in the present disclosure.

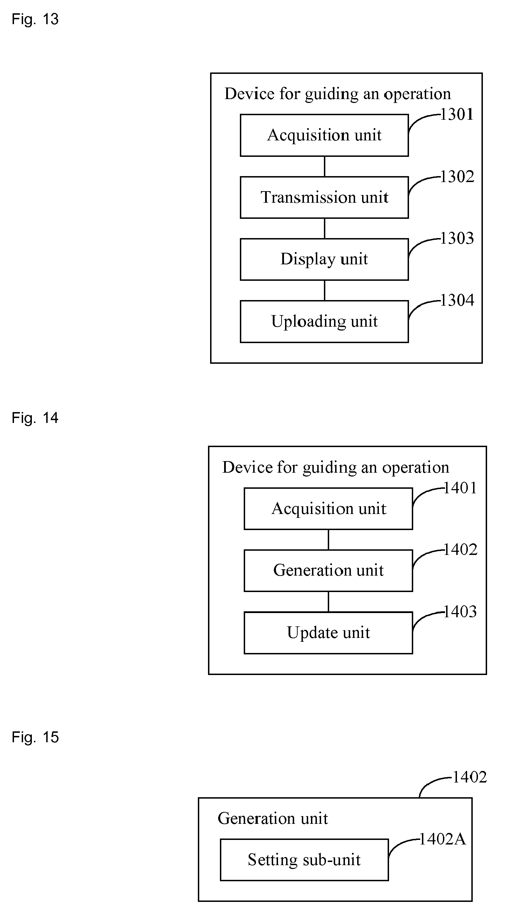

Fig. 13 is a block diagram illustrating a device for guiding an operation based on a mobile device side according to an example embodiment. Referring to Fig. 13, the device includes an acquisition unit 1301, a transmission unit 1302, a display unit 1303 and an uploading unit 1304.

Specifically, the acquisition unit 1301 is configured to obtain all of the operation tasks supported by an intelligent hardware.

The transmission unit 1302 is configured to issue to a server a request for obtaining completion progress of all of the operation tasks performed by a current user on the intelligent hardware and send the completion progress to the intelligent hardware such that operation authorization of the current user is configured by the intelligent hardware.

The display unit 1303 is configured to display guiding information for a current operation task according to the current operation task corresponding to the current user.

The uploading unit 1304 is configured to receive a completion status of the current operation task performed by the current user from the intelligent hardware, and upload the completion status to the server, such that completion progress is updated by the server.

Fig. 14 is a block diagram illustrating a device for guiding an operation based on an intelligent hardware side or a server side according to an example embodiment. Referring to Fig. 14, the device includes an acquisition unit 1401, a generation unit 1402 and an update unit 1403.

Specifically, the acquisition unit 1401 is configured to obtain historical operation data performed by a current user on the intelligent hardware.

The generation unit 1402 is configured to statistically analyze a hidden danger operation of the current user, and generate an operation task for the hidden danger operation.

The update unit 1403 is configured to update completion progress of all of the operation tasks performed by the current user on the intelligent hardware according to the operation task for the hidden danger operation.

As shown in Fig. 15, which is a block diagram illustrating another device for guiding an operation according to an example embodiment, on basis of the embodiment shown in Fig. 14, the generation unit 1402 may include a setting sub-unit 1402A.

Specifically, the setting sub-unit 1402A is configured to set an operation task for the hidden danger operation to be in uncompleted state when the operation task for the hidden danger operation already exists.

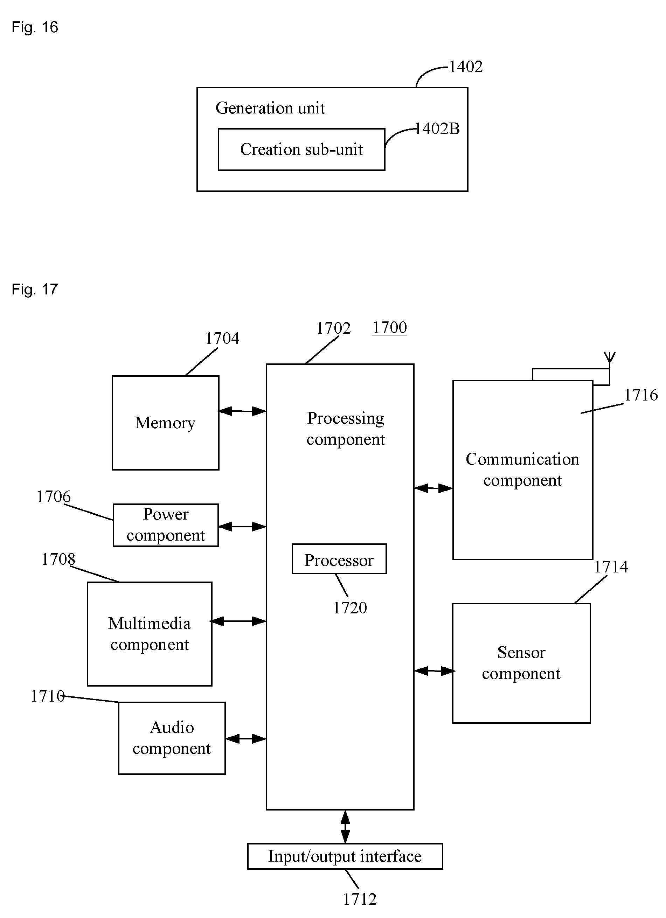

As shown in Fig. 16, which is a block diagram illustrating another device for guiding an operation according to an example embodiment, on basis of the embodiment shown in Fig. 14, the generation unit 1402 may include a creation sub-unit 1402B.

Specifically, the creation sub-unit 1402B is configured to create a new operation task for the intelligent hardware.

In the devices according to the abovementioned embodiments, the details of the operations executed by respective modules have been described in detail in connection with the embodiments of the method, and will not be described herein.

The embodiments of the device substantially correspond to the embodiments of the method. Therefore, relevant portions may be referred to the description for the corresponding portions of the embodiments of the method. The abovementioned embodiments of the device are merely illustrative. A unit described as a separate part may be or may not be physically separated. A part shown as a unit may be or may not be a physical unit, may be located in one place, or may be distributed to multiple network units. A part or all of the modules may be chosen as required to achieve the purpose of the embodiments of the present disclosure. Those skilled in the art may understand and implement the invention without creative work.

Correspondingly, the present disclosure further provides a device for guiding an operation based on a smart device side, and the device includes a processor and a memory configured to store processor executable instructions, wherein the processor is configured to obtain completion progress of an operation task performed by a current user on an intelligent hardware, wherein the operation task is set according to operation functions of the intelligent hardware; select a current operation task from uncompleted operation tasks based on the completion progress; configure operation authorization of the intelligent hardware for the user, so as to restrict the current user from implementing operation functions corresponding to uncompleted operation tasks except for the current operation task; and update the completion progress based on a completion status of the current operation task performed by the current user.

Correspondingly, the present disclosure further provides an intelligent hardware including a memory and one or more programs, wherein the one or more programs are stored in the memory and include instructions, when executed by one or more processors, configured to perform the following operations: obtaining completion progress of an operation task performed by a current user on an intelligent hardware, wherein the operation task is set according to operation functions of the intelligent hardware; selecting a current operation task from uncompleted operation tasks based on the completion progress; configuring operation authorization of the intelligent hardware for the current user, so as to restrict the current user from implementing operation functions corresponding to uncompleted operation tasks except for the current operation task; and updating the completion progress based on a completion status of the current operation task performed by the current user.

Correspondingly, the present disclosure further provides a device for guiding an operation based on a mobile device side, and the device includes a processor and a memory configured to store processor executable instructions, wherein the processor is configured to: obtain all of operation tasks supported by an intelligent hardware; issue to the server a request for obtaining completion progress of all of the operation tasks performed by a current user on the intelligent hardware, and send the completion progress to the intelligent hardware such that operation authorization of the current user is configured by the intelligent hardware; display guiding information for a current operation task according to the current operation task of the current user; and receive a completion status of the current operation task performed by the current user from the intelligent hardware, and upload the completion status to the server, such that the completion progress is updated by the server.

Correspondingly, the present disclosure further provides a mobile device including a memory and one or more programs, wherein the one or more programs are stored in the memory and include instructions, when executed by one or more processors, configured to perform the following operations: obtaining all of operation tasks supported by an intelligent hardware; issuing to the server a request for obtaining completion progress of all of operation tasks performed by a current user on the intelligent hardware, and sending the completion progress to the intelligent hardware such that operation authorization of the current user is configured by the intelligent hardware; displaying guiding information for a current operation task according to the current operation task of the current user; and receiving a completion status of the current operation task performed by the current user from the intelligent hardware, and uploading the completion status to the server, such that the completion progress is updated by the server.

Correspondingly, the present disclosure further provides a device for guiding an operation based on a server side, and the device includes a processor and a memory configured to store processor executable instructions, wherein the processor is configured to: obtain historical operation data of a current user for an intelligent hardware; analyze a hidden danger operation of the current user statistically, and generate an operation task for the hidden danger operation; and update completion progress of all of operation tasks performed by the current user on the intelligent hardware according to the operation task for the hidden danger operation.

Correspondingly, the present disclosure further provides a server including a memory and one or more programs, wherein the one or more programs are stored in the memory and include instructions, when executed by one or more processors, configured to perform the following operations: obtaining historical operation data of a current user for an intelligent hardware; analyzing a hidden danger operation of the current user statistically, and generating an operation task for the hidden danger operation; and updating completion progress of all of operation tasks performed by the current user on the intelligent hardware according to the operation task for the hidden danger operation.

Fig. 17 is a block diagram illustrating a device 1700 for guiding an operation according to an example embodiment. For example, when the device 1700 is an intelligent hardware according to the technical solutions of the present disclosure, the device 1700 may be a balance car, a drone or the like. When the device 1700 is a mobile device according to the technical solutions of the present disclosure, the device 1700 may be a mobile phone, a computer, a digital broadcast terminal, a messaging device, a gaming console, a tablet, a medical device, exercise equipment, a personal digital assistant and the like.

With reference to Fig. 17, the device 1700 may include one or more of the following components: a processing component 1702, a memory 1704, a power component 706, a multimedia component 1708, an audio component 1710, an Input/Output (I/O) interface 1712, a sensor component 1714 and a communication component 1716.

The processing component 1702 typically controls overall operations of the device 1700, such as, operations associated with display, telephone calls, data communications, camera, and recording. The processing component 1702 may include one or more processors 1720 for executing instructions so as to perform all or part of steps in the abovementioned methods. Moreover, the processing component 1702 may include one or more modules which facilitate the interaction between the processing component 1702 and the other components. For example, the processing component 1702 may include a multimedia module for facilitating interaction between the multimedia component 1708 and the processing component 1702.

The memory 1704 is configured to store various types of data to support the operation of the device 1700. Examples of such data include instructions for any applications or methods operated on the device 1700, contact data, phonebook data, messages, pictures, videos, etc. The memory 1704 may be implemented by any type of volatile or non-volatile memory devices, or a combination thereof, such as a Static Random Access Memory (SRAM), an Electrically Erasable Programmable Read-Only Memory (EEPROM), an Erasable Programmable Read Only Memory (EPROM), a Programmable Read Only Memory (PROM), a Read-Only Memory (ROM), a magnetic memory, a flash memory, and a magnetic or optical disk.

The power component 1706 provides power for various components of the device 1700. The power component 1706 may include a power management system, one or more power supplies, and other components associated with generation, management and distribution of power for the device 1700.

The multimedia component 1708 includes a screen for providing an output interface between the device 1700 and a user. In some aspects, the screen may include a liquid crystal display (LCD) and a touch panel (TP). If the screen includes a touch panel, the screen may be implemented as a touch screen to receive an input signal from the user. The touch panel includes one or more touch sensors to sense touches, swipes and gestures on the TP. The touch sensor may not only sense a boundary of a touch or swipe action, but also sense a duration and pressure associated with the touch or swipe operation. In some aspects, the multimedia component 1708 includes a front camera and/or a rear camera. The front camera and/or the rear camera may receive external multimedia data when the mobile terminal 1700 is in an operation mode, such as a photographing mode or a video mode. Each of the front camera and the rear camera may be a fixed optical lens system or have focusing and optical zooming capabilities.

The audio component 1710 is configured to output and/or input an audio signal. For example, the audio component 1710 includes a microphone (MIC), and the microphone is configured to receive an external audio signal when the device 1700 is in an operation mode, such as a call mode, a recording mode and a voice recognition mode. The received audio signal may be further stored in the memory 1704 or transmitted via the communication module 1716. In some embodiments, the audio component 1710 further includes a speaker configured to output the audio signal.

The I/O interface 1712 provides an interface between the processing component 1702 and a peripheral interface module, and the peripheral interface module may be a keyboard, a click wheel, a button and the like. The button may include, but not limited to: a home button, a volume button, a starting button and a locking button.

The sensor component 1714 includes one or more sensors configured to provide status assessment in various aspects for the device 1700. For example, the sensor component 1714 can detect an on/off status of the device 1700, and relative positioning of components, such as a display and small keypad of the device 1700, and the sensor component 1714 may further detect a change in a position of the device 1700 or a component of the device 1700, presence or absence of contact between the user and the device 1700, orientation or acceleration/deceleration of the device 1700 and a change in temperature of the device 1700. The sensor component 1714 may include a proximity sensor configured to detect presence of an object nearby without any physical contact. The sensor component 1714 may also include an optical sensor, such as a Complementary Metal Oxide Semiconductor (CMOS) or Charge Coupled Device (CCD) image sensor, configured for use in imaging applications. In some aspects, the sensor component 1714 may also include an acceleration sensor, a gyroscope sensor, a magnetic sensor, a pressure sensor or a temperature sensor.

The communication component 1716 is configured to facilitate wired or wireless communication between the device 1700 and another device. The device 1700 can access a communication-standard-based wireless network, such as a Wireless Fidelity (WiFi) network, a 2nd-Generation (2G) or 3rd-Generation (3G) network or a combination thereof. In an exemplary aspect, the communication component 716 receives a broadcast signal or broadcast associated information from an external broadcast management system through a broadcast channel. In an exemplary aspect, the communication component 1716 further includes a Near Field Communication (NFC) module to facilitate short-range communication. For example, the NFC module may be implemented based on a Radio Frequency Identification (RFID) technology, an Infrared Data Association (IrDA) technology, an Ultra-Wide Band (UWB) technology, a Bluetooth (BT) technology and another technology.

In the exemplary aspect, the device 1700 may be implemented by one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), controllers, microcontrollers, microprocessors or other electronic components, and is configured to execute the abovementioned methods.

In the exemplary aspect, there is also provided a non-transitory computer readable storage medium including instructions, such as the memory 1704 including instructions and the instructions may be executed by the processor 1720 of the device 1700 to implement the abovementioned methods. For example, the non-transitory computer readable storage medium may be a ROM, a Random Access Memory (RAM), a Compact Disc Read Only Memory (CD-ROM), a magnetic tape, a floppy disc, an optical data storage device, and the like.

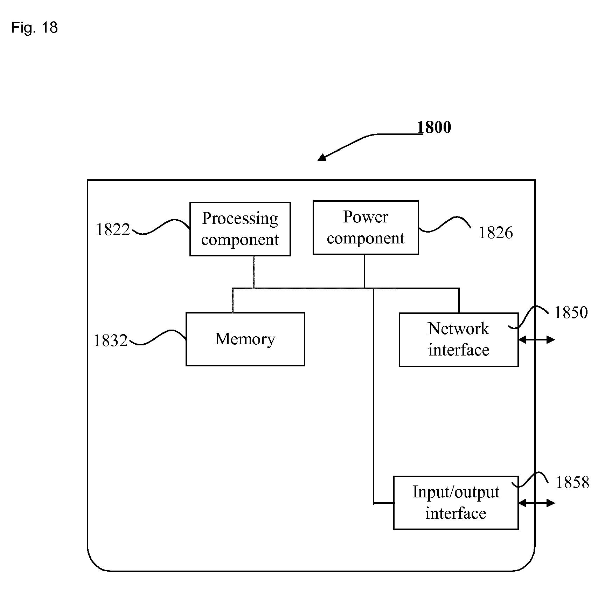

Fig. 18 is a block diagram illustrating a device 1800 for guiding an operation according to an example embodiment. For example, the device 1800 can be provided as a server. Referring to Fig. 18, the device 1800 includes a processing component 1822 which further includes one or more processors and a storage resource represented by a memory 1832, wherein the memory 1832 is configured to store instructions executable by the processing component 1822, such as applications. The applications stored in the memory 1832 may include one or more modules each of which corresponds to a set of instructions. In addition, the processing component 1822 is configured to execute instructions so as to perform the methods described above.

The device 1800 may further include a power component 1826 configured to perform a power supply management for the device 1800, a wired or wireless network interface 1805 configured to connect the device 1800 to a network, and an input/output(I/O) interface 1858. The device 1800 can be operated based on an operating system stored in a memory 1832, such as Windows ServerTM, Mac OS XTM, UnixTM, LinuxTM, FreeBSDTM and the like.

Other aspects of the disclosure will be apparent to those skilled in the art from consideration of the specification and practice of the invention disclosed herein. This application is intended to cover any variations, uses, or adaptations of the invention following the general principles thereof and including such departures from the present disclosure as come within known or customary practice in the art. It is intended that the specification and examples be considered as exemplary only, with a true scope and spirit of the invention being indicated by the following claims.

It will be appreciated that the present invention is not limited to the precise structures that have been described above and illustrated in the accompanying drawings, and that various modifications and changes can be made without departing from the scope thereof.

## Claims

1. A method for guiding an operation comprising:
obtaining (102) completion progress of operation tasks performed by a current user on an intelligent hardware, wherein the operation tasks are set according to operation functions of the intelligent hardware;
selecting (104) a current operation task from uncompleted operation tasks based on the completion progress;
configuring (106) operation authorization of the intelligent hardware for the current user, so as to restrict the current user from implementing operation functions corresponding to the uncompleted operation tasks except for the current operation task; and
updating (108) the completion progress based on a completion status of the current operation task performed by the current user.

2. The method according to claim 1, wherein the step of obtaining (102) the completion progress of the operation tasks performed by the current user on the intelligent hardware comprises:
identifying (302) identity information of the current user; and
searching (304) for completion progress corresponding to the identity information from local storage space of the intelligent hardware; or issuing a request to a server for obtaining completion progress corresponding to the identity information.

3. The method according to claim 1 or 2, further comprising:
sending the current operation task to a mobile device connected with the intelligent hardware, such that guiding information for the current operation task is displayed on the mobile device.

4. The method according to claim 1, 2 or 3, further comprising:
recording historical operation data of the current user; and
uploading the historical operation data to a server, wherein the server analyzes a hidden danger operation of the current user statistically, generates an operation task for the hidden danger operation and updates the completion progress.

5. A method for guiding an operation comprising:
obtaining (702, 802) historical operation data of a current user for an intelligent hardware;
analyzing (704, 804) a hidden danger operation of the current user statistically, and generating (806) an operation task for the hidden danger operation; and
updating (706) completion progress of all of the operation tasks performed by the current user on the intelligent hardware according to the operation task for the hidden danger operation.

6. The method according to claim 5, wherein the step of generating (806) the operation task for the hidden danger operation comprises:
setting (810) the operation task for the hidden danger operation to be in an uncompleted state when the operation task for the hidden danger operation already exists.

7. The method according to claim 5 or 6, wherein the step of generating (806) the operation task for the hidden danger operation comprises:
creating (812) a new operation task for the intelligent hardware.

8. A device for guiding an operation comprising:
an acquisition unit (91), configured to obtain completion progress of operation tasks performed by a current user on an intelligent hardware, wherein the operation tasks are set according to operation functions of the intelligent hardware;
a selection unit (92), configured to select a current operation task from uncompleted operation tasks based on the completion progress;
a configuration unit (93), configured to configure operation authorization of the intelligent hardware for the current user, so as to restrict the current user from implementing operation functions corresponding to the uncompleted operation tasks except for the current operation task; and
an update unit (94), configured to update the completion progress based on a completion status of the current operation task performed by the current user.

9. The device according to claim 8, wherein the acquisition unit comprises:
an identification sub-unit, configured to identify identity information of the current user; and
a look-up sub-unit or a request sub-unit, wherein the look-up sub-unit is configured to search for completion progress corresponding to the identity information from local storage space of the intelligent hardware; and the request sub-unit is configured to issue a request to a server for obtaining completion progress corresponding to the identity information.

10. The device according to claim 8 or 9, further comprising:
a sending unit, configured to send the current operation task to a mobile device connected with the intelligent hardware, such that guiding information for the current operation task is displayed on the mobile device.

11. The device according to claim 8, 9 or 10, further comprising:
a recording unit, configured to record historical operation data of the current user; and
an uploading unit, configured to upload the historical operation data to a server, wherein the server analyzes a hidden danger operation of the current user statistically, generates an operation task for the hidden danger operation and updates the completion progress.

12. A device for guiding an operation comprising:
an acquisition unit (1401), configured to obtain historical operation data of a current user for an intelligent hardware;
a generation unit (1402), configured to analyze a hidden danger operation of the current user statistically, and generate an operation task for the hidden danger operation; and
an update unit (1403), configured to update completion progress of all of operation tasks performed by the current user on the intelligent hardware according to the operation task for the hidden danger operation.

13. The device according to claim 12, wherein the generation unit comprises:
a setting sub-unit, configured to set the operation task for the hidden danger operation to be in an uncompleted state when the operation task for the hidden danger operation already exists.

14. The device according to claim 12 or 13, wherein the generation unit comprises:
a creation sub-unit, configured to create a new operation task for the intelligent hardware.

15. A computer program including instructions for executing the steps of a method for guiding an operation according to any one of claims 1 to 4 when said program is executed by a computer.
